# EUROPÄISCHE PATENTSCHRIFT

(11) **EP 1 509 738 B1**
(45) Veröffentlichungstag und Bekanntmachung des Hinweises auf die Patenterteilung: **12.10.2016**
(21) Anmeldenummer: 03755969.7
(22) Anmeldetag: 03.06.2003
(51) Int. Cl.: F28D 20/02, F24F 12/00, F24F 5/00, F24D 3/16

(54) **VERFAHREN ZUR WÄRME- UND KÄLTEVERSORGUNG EINES RAUMES UND GEBAÜDES MIT EINER MEHRZAHL VON RÄUMEN**
METHOD FOR HEATING AND COOLING A ROOM AND A BUILDING WITH A PLURALITY OF ROOMS
PROCEDE DE CHAUFFAGE ET DE REFROIDISSEMENT D'UNE PIECE ET D'UN BATIMENT COMPRENANT PLUSIEURS PIECES

(30) Priorität: 03.06.2002 DE 10224656; 29.08.2002 DE 10239785; 13.05.2003 DE 10321646
(43) Veröffentlichungstag der Anmeldung: 02.03.2005
(60) Teilanmeldung: 10185272.1
(73) Patentinhaber: Autarkis B.V., 7451 PK Holten (NL)
(72) Erfinder: FIEBACK, Klaus, 14467 Potsdam (DE); LAUBE, Andreas, 15517 Fürstenwalde (DE); KUTZKER, Lutz, 15518 Rauen (DE); KUHLEI, Harald, 22607 Hamburg (DE); SCHMITZ, Antonius, Hubertus, Henricus, NL-6061 CT Posterholt (NL)
(74) Vertreter: van Essen, Peter Augustinus
(86) Internationale Anmeldenummer: PCT/EP2003/005796
(87) Internationale Veröffentlichungsnummer: WO 2003/102484

(56) Entgegenhaltungen:
- WO-A-00/11424
- WO-A-01/38810
- WO-A-96/14550
- DE-A- 2 712 943
- DE-A- 10 102 250
- DE-A- 19 813 562
- DE-A- 19 836 048
- DE-U- 20 208 898
- US-A- 3 893 506
- US-A- 4 482 010
- US-A- 4 781 243
- US-A- 5 423 187
- US-A- 6 062 296

## Beschreibung

Die Erfindung betrifft zunächst ein Verfahren nach den Merkmalen des Oberbegriffes des Anspruches 1.

Weiter betrifft die Erfindung ein Gebäude mit einer Mehrzahl nach den Merkmalen des Oberbegriffes des Anspruches 11.

Die angesprochenen Verfahren zur wärmemäßigen (wie nachstehend kurz die wärmemäßige oder kältemäßige Konditionierung angesprochen wird) Konditionierung von Gebäuderäumen sind in den verschiedensten Ausgestaltungen bekannt. Es ist auch bekannt, die wärmemäßige Konditionierung eines Gebäuderaumes durch Latentwärmespeicherkörper zu unterstützen (vgl. EP 0 791163 B1). Weiter gibt es auch bereits seit langem das Bestreben, die erforderliche Wärmezufuhr zu einem Raum durch gesonderte Heizmittel soweit wie möglich herabzusetzen. Dies durch Rückgewinnung von in der Abluft enthaltener sensibler und/oder latenter Wärme und Übertragung dieser Wärme auf die Zuluft. Weiter ist es auch für sich bereits bekannt, gesonderte Wärmequellen in einem Raum, wie etwa die Kühlung von Geräten der Datenverarbeitung oder die Wärmeabgabe von Personen in dem Raum, im Hinblick auf eine Senkung der von außen zuzuführende Wärme zu nutzen.

Allgemein strebt eine Raumluft-Konditionierung an, ein gesundes Raumluftklima zu erreichen im Hinblick auf eine Frischluftversorgung wie auch im Hinblick auf eine wärmemäßige Konditionierung. Zudem wird oft auch noch eine feuchtemäßige Konditionierung angestrebt.

Zum Stand der Technik ist auf die WO01/38810 zu verweisen. Hieraus ist die Anordnung deckenseitiger Latentwärmespeicherkörper bekannt. Die Zuluft wird über eine übliche Zuluftöffnung des Raumes zugegeben. Die bekannten Latentwärmespeicherkörper ermöglichen kein Entlangsstreichen von Luft. Es ergeben sich Luftführungen, die als wenig günstig anzusehen sind.

Zudem wird auf die DE 2712943 A1 und die US 6062296 A1 noch zum Stand der Technik verwiesen.

Ausgehend von dem genannten Stand der Technik stellt sich der Erfindung die Aufgabe, ein Verfahren zur wärme- und/oder kälternäßigen und ggf. feuchtemäßigen Konditionierung von Raumluft anzugeben bzw. ein Gebäude mit einer Mehrzahl von Räumen anzugeben, bei dem jeweils eine Nutzung von Latentwärmespeicherkörpern vorteilhaft zur Raumluftkonditionierung gegeben ist.

Diese Aufgabe ist verfahrensmäßig beim Gegenstand des Anspruches 1 gelöst und vorrichtungsmäßig beim Gegenstand des Anspruches 11.

Es ist eine gesonderte Zuluftströmung ausbildende Zuluft-Führung vorgesehen und die Raumluft wird durch Anordnung von Latentwärmespeicherkörpern in dem Zuluftstrom oder in einer durch den Zuluftstrom und/oder die Latentwärmespeicherkörper induzierten Sekundärströmung in ihrem Wärmegehalt verändert. Im Einzelnen ist vorgesehen, dass die Latentwärmespeicherkörper in die Konditionierung der Raumluft bei einem System, das jedenfalls über eine definierte Zuluftströmung verfügt, jeweils bezogen auf einen Gebäuderaum eines ggf. größeren Komplexes, integrierend einbezogen werden. Sie sind wesentlicher Bestandteil der gewünschten Raumluft-Konditionierung. Die der Raumluft aufgeprägte Luftströmung (jedenfalls durch die definierte Luftluftströmung) trägt wesentlich zu einer effektiven Nutzung der Latentwärmespeicherkörper bei, da hierdurch ständig höhere Wärmeübergangszahlen an den Latentwärmespeicherkörpern erreicht werden, als aufgrund natürlicher Konvektion im Raum sich einstellen würden.

Ggf. auch ergänzend (in welchem Fall in dem Gebäuderaum zwar auch Latentwärmespeicherkörper angeordnet sind, aber nicht so viel bzw. nicht mit einem solchen Volumen, dass sie alleine für die Raumluftkonditionierung ausreichend wären) ist auch vorgesehen, dass die Zuluft vor Einströmen in den Gebäuderaum mittels außerhalb des Gebäuderaumes angeordneter Latentwärmespeicherkörper konditioniert wird. Ein solches Verfahren eröffnet die Möglichkeit, eine konzentrierte Konditionierung von Luft die später als Zuluft für einen Gebäuderaum genutzt wird, in einem gesonderten Bereich des Gebäudes vorzumehmen. Insofern ist es auch bevorzugt dass für die Konditionierung der Zuluft eine Vielzahl von Gebäuderäumen, beispielsweise für die Gebäuderäume eines Stockwerkes eines mehrstöckigen (Büro-) Gebäudes, eine Vielzahl von Latentwärmespeicherkörpern in einem gesonderten Konditionierungsraum angeordnet sind. Diese alternative Vorgehensweise hat auch den Vorteil, dass die (spätere) Zuluft des Gebäuderaumes an den außerhalb des Gebäuderaumes angeordneten Latentwärmespeicherkörpern mit sehr hohen Luftgeschwindigkeiten, die in einem Gebäuderaum aus Behaglichkeitsgründen beispielsweise nicht möglich wären, vorbei geführt werden kann. Somit können dort relativ hohe Wärmeübergangskoeffizienten erreicht werden. Auch lässt sich die Wartung und ein eventueller Austausch von einzelnen Latentwärmespeicherkörpern außerhalb eines (bürornäßig) genutzten Gebäuderaumes ohne größere Behinderungen durchführen. Der Konditionierungsraum kann insbesondere ein ansonsten üblicher Raum des Gebäudes sein, eines bestimmten Stockwerkes des Gebäudes der beispielsweise bis auf die Belassung von erforderlichen Zugangswegen mit Latentwärmespeicherkörpern gefüllt ist. Es kann sich insbesondere auch um einen Innenraum handeln, der keine Fenster nach außen aufweist und aus diesen Gründen oftmals ohnehin weniger Nutzwert hat.

Für die Erfindung ist auch wesentlich, dass die wärmemäßige und gegebenenfalls auch feuchtigkeitsmäßige Konditionierung ausschließlich durch die hier beschriebenen Maßnahmen sichergestellt werden kann. Hierbei kann zusätzlich insbesondere eine angepasste Fassadengestaltung wesentlich sein. Die Transmission (Wärme/Kälte) der Fassade, im Sommer bzw. Winter, ist bevorzugt sehr gering eingestellt Darüber hinaus sind bevorzugt hinsichtlich der Sonnen- oder Diffusstrahlung besondere Vorkehrungen getroffen. Dieses trifft auch auf das alternative Konzept zu, wenn auch nicht unbedingt auf die Nutzung eines Raumes ohne Außenfenster, was aber auch nur eine der Möglichkeiten ist. So soll ein passiver Solarenergie-Gewinn im Winter sehr hoch sein. Im Sommer aber möglichst gering. Während die Transmission durch die Wandkonstruktion, insbesondere die Wärmedämmung, beeinflusst werden kann, kann der Solarenergie-Gewinn bspw. durch Abdeckung bzw. Beschattung im Sommer und möglichst freiem Strahlungsdurchgang im Winter beeinflusst werden. Die genannten Latentwärmespeicherkörper sind bevorzugt als plattenartige Kassetten ausgebildet. Jedenfalls besitzen sie im Vergleich zu ihrer Dicke relativ große, zur Wärmeübertragung geeignete Seitenflächen. Die Erstreckung der Seitenflächen, jedenfalls in einer bevorzugten Ertsreckungsrichtung, beträgt bevorzugt das 10- bis 100-fache der Dicke des (jeweiligen) Latentwärmespeicherkörpers. Hierbei kann die Erstreckung auch durch die Zusammensetzung mehrerer plattenförmiger Latentwärmespeicherkörper erreicht sein.

Die Latentwärmespeicherkörper erbringen einerseits die geforderte Wärme-bzw. Kälteleistung. Andererseits aber auch die Speicherfähigkeit zur Überbrückung von Unterbrechungen im normalen Nutzungsbetrieb eines Gebäuderaumes, bspw. am Wochenende.

Letztlich ist es das Ziel der Erfindung, in ganz bevorzugten Ausgestaltungen, ein autarkes, energetisch möglichst nicht auf Fremdenergie angewiesenes System, das zudem insbesondere im Unterhalt kostengünstig ist, zur Konditionierung von Raumluft bereitzustellen.

Besondere Bedeutung kommt auch der in den Latentwärmespeicherkörpern durch das Latentwärmespeichermaterial vorgegebenen Phasenwechseltemperatur zu. Um, wie bevorzugt im Rahmen der Erfindung vorgesehen, dieselben in einem Gebäuderaum oder außerhalb eines Gebäuderaumes bzw. in einem Konditionierungsraum installierten Latentwärmespeicherkörper sowohl zur kühlenden wie auch zur wärmenden Konditionierung der Raumluft verwenden zu können, ist es wesentlich, dass sich die Phasenwechseltemperatür innerhalb der Temperatur-Behaglichkeitsbandbreite bewegt. Im allgemeinen liegt diese für den Menschen zwischen 20 und 26°C. Während im Sommer, aufgrund leichterer Bekleidung etwa, eine höhere Temperatur, nämlich bis hin zu 26° C, behaglich empfunden wird, liegt die untere Grenze im Winter etwa bei 20°C. Entsprechend ist es bevorzugt, dass die Latentwärmespeicherkörper eine Phasenwechseltemperatur bspw. bei 21, 21,5 oder 22°C aufweisen. Sie kann aber auch bei 23,24,25 oder gar 26°C (bzw. Zwischenwerten) liegen, Hierbei ist es auch möglich, dass in dem Raum Latentwärmespeicherkörper mit unterschiedlichen Phasenwechseltemperaturen angeordnet sind, welche jedoch sich jeweils möglichst in der angegebenen Bandbreite befinden. Gerade bei der alternativen Verfahrensweise, bei welcher die Latentwärmespeicherkörper jedenfalls nicht in dem von Menschen zur üblichen Arbeit benutzen Gebäuderaum angeordnet sind, können auch Latentwärmespeicherkörper mit wesentlich ober bzw. unterhalb der genannten Behaglichkeitstemperaturbreite angesiedelten Phasenwechseltemperatur des Latentwärmespeichermaterials vorgesehen sein, da durch die Luftführung eine Mischtemperatur erreicht werden kann.

In einer ganz bevorzugten Ausführungsform der Erfindung ist auch wesentlich, dass das Innenklima vom Außenklima, also dem Klima außerhalb des Gebäudes, praktisch vollständig entkoppelt ist Die Temperaturführung muss in diesem Zusammenhang so sein, dass ein ständiger Kühlbetrieb gegeben ist. Im Einzelnen ist dies weiter unten noch näher erläutert.

Wesentlich für das hier beschriebene System, fokussiert auf die Anordnung der Latentwärmespeicherkörper (zumindest teilweise) in dem Gebäuderaum selbst ist auch der Strahlungswärmeaustausch, der sich mit derartigen Elementen ergibt. Die Wände und der Boden werden ummittelbar auch im Strahlungswärmeaustausch mit den bevorzugt deckenseitig angeordneten Latentwärmespeicherkörpern erwärmt und sorgen so auch auf diese Weise für ein als angenehm empfundenes Raumklima. Zumal die Strahlungstemperatur der Latentwarmespeicherkörper, wie angegeben, ohnehin sich im Temperatur-Behaglichkeitsbereich befindet. Der Strahlungswärmeaustausch kann auch durch eine vorzugsweise metallische Zwischendecke gegeben sein, die ihrerseits von den Darüber angeordneten Latentwärmespeicherkörpern konvektiv und/oder durch Strahlung auf eine der Phasenwechseltempezatux der Latentwärmespeicherkörper angenäherte Temperatur erwärmt wird.

Von Bedeutung ist in diesem Zusammenhang auch, dass die strahlende Fläche (bspw. Latentwamespeicherkörper oder Zwischendecke) einen Anteil an der verbleibenden Raumfläche von mehr als 10%, bevorzugt mehr als 15%, aufweist. Man kann dieses Verhältnis auch allein auf die Bodenfläche eines Gebäuderaumes beziehen. Dann liegt der Anteil bevorzugt bei mehr als 60, weiter bevorzugt bei mehr als 70%.

In einer weiteren Ausgestaltung ist es zunächst vorteilhaft und geeignet, die Zu- bzw. Abluft mittels der Latentwärmespeicherkörper in ihrem Wärmegehalt innerhalb des Raumes zu verändern. Dies dadurch, dass die Zu- bzw. Abluft unmittelbar über die Latentwärmespeicherkörper strömungsmäßig geführt wird und/ oder dass durch die Zu- bzw. Abluft induzierte Sekundärströmungen mit der Zu- bzw. Abluft vermischt werden und so sich eine entsprechende Mischtemperatur in dem Zu- bzw. Abluftstrom ergibt, bevor diese sich im Raum verteilt oder aus dem Raum herausgeführt wird. Hierbei ist auch verteilhaft, dass die Latentwärmespeicherkörper der Decke des Raumes zugeordnet sind. Sie können insbesondere vorteilhaft oberhalb einer als luftdurchlässige Sichtdecke ausgebildeten Zwischendecke (Sichtdecke) angeordnet sein. Als Sichtdecke können bekannte Deckensysteme, etwa auf Basis von Lochmetall oder Rippenstreckmetall, Verwendung finden. Wesentlich ist, dass zwischen der Raumluft und den Latentwärmespeicherkörpern, die sich bevorzugt oberhalb der Sichtdecke befinden, ein thermischer Energieaustausch möglich ist

Soweit in einem Gebäuderaum selbst keine Latentwärmespeicherkörper angeordnet sind, ist gleichwohl vorteilhaft die genannte Sichtdecke vorgesehen.

Wenn man bei einer ersten Betrachtung von einem geladenen Latentwärmespeicherkörper ausgeht, d.h. dass am Beispiel eines paraffinbasierten Latentwärmespeicherkörpers die Phasenwechseltemperatur im gesamten Latentwärmespeicherkörper überschritten ist, erfolgt, bei einer Raumluft, die eine geringere Temperatur aufweist, eine Entladung der Latentwärmespeicherkörper. In der Umgebung der Latentwärmespeicherkörper wird die Luft aufgewärmt und durch eine in einem Gebäuderaum immer gegebene, aber durch die Latentwärmekörper-Zuordnung und die Zuluftströmung (ggf. auch Abluftströmung) entsprechend verstärkte freie Raumströmung verteilt. Somit steigt die Temperatur in dem Gebäuderaum auf die gewünschte Temperatur an, in der Regel eben auf eine Temperatur in der Nähe der Phasenwechseltemperatur der Latentwärmespeicherkörper. Dies kann noch unterstützt bzw. feinreguliert werden durch eine Zuluftmengenregulierung (Volumenstrom) und/oder die Temperatur der Zuluft. In Phasen, in welchen die Latentwännespeicherkörper eine gegenüber der Raumluft niedrigere Temperatur aufweisen, wird an den Latentwärmespeicherkörpern Kaltluft generiert, die absinkt und entsprechend eine Luftzirkulation in dem Gebäuderaum (mit) hervorruft oder verstärkt.

Die Latentwärmespeicherkörper, in einer der beschriebenen Ausführungsformen, sind nicht nur im Hinblick auf die Raumlufikonditionierung vozteilhaft. Sie haben auch vorteilhafte Auswirkungen auf die Akustik bzw. den Schallpegel in einem Raum und können, wie weiter unten noch im Einzelnen ausgeführt, auch zur Feuchtekonditionierung beitragen. Unter anderem kann das gesamte so aufgebaute Deckensystem auch dadurch an die Anforderung der Raumakustik angepasst sein, dass einseitig an den Latentwärmespeicherkörpern oder gesondert hiervon, gehaltert etwa an der Sichtdecke, Schaumstofflagen vorgesehen sind. Insbesondere solche aus offenporigem Schaumstoff.

Grundsätzlich lassen sich derartige Latentwärmespeicherkörper dann auch durch sonstige Energiequellen, etwa elektrische Beheizung, wieder laden. Im Rahmen der Erfindung ist es jedoch bevorzugt, dass auch die Beladung der Latentwärmespeicherkörper durch die Raumluft und/oder den Gebäuderaum, nämlich die Wände des Gebäuderaumes - vermittels Strahlung etwa - selbst erfolgt. Dies kann etwa in Zeiten, in denen der Gebäuderaum nicht genutzt wird, dadurch erfolgen, dass die Raumlufttemperatur deutlich über die Phasenwechseltemperatur der Latentwärmespeicherkörper angehoben wird und so über einen längeren Zeitraum, bspw. während der Nacht, eine Aufladung der Latentwärmespeicherkörper vorgenommen wird. Etwa in Gebäuderämnen, in denen ohnehin Wärmequellen vorhanden sind, etwa Lüfhungen von ADV-Systemen, kann in einem Zeitabschnitt, in dem der Gebäuderaum nicht benutzt wird und etwa durch Jalousien auch der Wärmeverlust nach außen stark gebremst ist, durch einfachen Umluftbetrieb eine solche Anhebung der Raumlufttemperatur erfolgen, dass der vorgenannte gewünschte Effekt erzielt wird.

Im Hinblick auf die angestrebte optimale Auslegung, bei welcher kontinuierlich eine Kühlung der Raumluft erfolgt, ist auch angestrebt, dass keine sonstigen Energiequellen erforderlich sind. Falls sie doch erforderlich sind, werden sie allenfalls tagsüber - zur Kühlung - zum Einsatz kommen.

Die so hervorgerufene Zirkulation (Sekundärströmung) ist auch besonders wichtig zum Wärmetausch der Raumluft mit den Latentwärmespeicherkörpern. Wenn etwa die Zuluft in der Menge eines zweifachen Luftaustausches pro Zeiteinheit (pro Stunde) zuströmt, kann mittels der Sekundarströmungen ein Strömungseffekt an den Latentwärmespeicherkörpern erzielt werden - und dies ist bevorzugt angestrebt - der einem bis zu fünffachen Luftwechsel entspricht. Weiter bevorzugt ist der Luftaustausch im Bereich des 1,5 bis 5-flachen, insbesondere 2,5-, 3-, 3,5-, 4-fachen und der Strömungseffekt an den Latentwärmespeicherkörpern entsprechend.

Durch die Latentwärmespeicherkörper generierte Kaltluft (im Vergleich zur Warmluft) kann insbesondere auch während eines Sommerbetriebes vorteilhaft ausgenutzt werden. Die Latentwärmespeicherkörper dienen dann - bevorzugt bei unveränderter Einstellung hinsichtlich der Phasenwechseltemperatur gegenüber einem Winterbetrieb - als Kühlungselemente.

Weiter ist es bevorzugt, dass eine Be- bzw. Entladung der Latentwärmespeicherkörper durch die Zu- bzw. Abluft durch Ausnutzung entgegengesetzter Belastungsfälle vorgenommen wird. Entgegengesetzte Belastungsfälle können etwa durch Tag-/Nachtunterschiede gegeben sein. Beispielsweise in der Sommerzeit ist tagsüber eine Kühlung eines Raumes gewünscht, während dagegen oft, mit Ausnahme einiger weniger Nächte mit sehr hohen Temperaturen, nachts eine solche Abkühlung eintritt, dass diese Abkühlung zur - in diesem Fall - Entladung der Latentwärmespeicherkörper genutzt werden kann. Beispielsweise wird man dann im Nachtbetrieb die Zuluft ohne Wärmetausch mit der Abluft in den Raum einführen um durch die Absenkung der Raumtemperatur aber auch und insbesondere durch das Entlangströmen oder die induzierten Sekundärströme bezüglich der Latentwärmespeicherkörper diese rasch zu entladen. Derartige entgegengesetzte Belastungsfälle können auch durch während einer Bürozeit sich im Raum befindliche Personen, die bekanntlich Wärmequellen darstellen, und außerhalb der Bürozeit eben fehlende Wärmequellen gegeben sein. Darüber hinaus auch durch nachts (auch) laufende Kühlaggregate, deren eigene Wärmetauscher auch wieder Wärmequellen sind.

Insbesondere bei der alternativen Verfahrensweise kann vorteilhaft auch ein Konditionierungsraum mit Latentwärmespeicherkörpern im WärmeBehaglichkeitsbereich (oder auch deutlich darüber, da auch eine Mischung mit kühlerer Luft vorgenommen werden kann) vorgesehen sein und auch ein Koditionierungsraum mit Latentkältespeicherkörpern, aus dem dann Kühlluft zugemischt oder allein genutzt werden kann.

Insbesondere ist es bevorzugt, dass die Zu- bzw. Abluft so geführt wird, dass ein Zu- bzw. Abluftstrom eine an den Latentwärmespeicherplatten entlangströmende und in den Zu- bzw. Abluftstrom mündende Sekundärströmung induziert. In diesem Zusammenhang ist es auch bevorzugt, dass diese Sekundärströmungen durch eigene Luftleitelemente in ihrer Intensität beeinflusst sind bzw. werden können. Diese Luftleitelemente, die geeigneter Weise dann als Abgrenzung zu einem Zu- oder Abluftstrom angeordnet sind, können das Maß der in die Zu- bzw. Abluft einströmenden Sekundärluftmenge beeinflussen und so zu einer gewünschten Feinregulierung der Temperatur der Zu- bzw. Abluft, aber auch der Sekundärströmung als solche beitragen.

Bezüglich der Latentwärmespeicherkörper ist es auch bevorzugt, diese in ihrer Leistung (Wärme-/Kälteabgabe pro Zeiteinheit) beeinflussen zu können. Dies bspw. durch in ihrem Abdeckungsgrad veränderbare Abdeckungen der Latentwärmespeicherkörper, die den Latentwärmespeicherkörper dem Wärmetausch mit der Luftströmung (ggf. Sekundärströmung) mit einer veränderbaren Fläche aussetzen. Dies kann etwa auch durch Luftleitsysteme als solche erreicht werden.

Auch ist es bevorzugt, dass in der Heizperiode außerhalb einer Bürozeit ein Umluftbetrieb gefahren wird, zur Aufheizung der Latentwärmespeicherkörper mittels maschinengebundener Wärmequellen in dem Raum. Dem liegt die Erkenntnis zugrunde, dass ein Sauerstoffbedarf in dieser Zeit praktisch nicht gegeben ist, also, zumindest zeitweise, auf die Zuführung von Frischluft verzichtet werden kann. Auch, dass mitunter zeitweise, was eine Raumluftkonditionierung grundsätzlich auch leistet, die Abfuhr von Schadstoffen und CO₂ nicht erforderlich ist.

Weiterhin ist es auch bevorzugt, dass zugleich mit der wärmemäßigen Konditionierung der Raumluft eine feuchtigkeitsmäßige Konditionierung vorgenommen wird. Hierzu ist es bevorzugt, in den Weg der strömenden, ggf. aufoder absteigenden Raumluft feuchtigkeitsspeichernde Elemente anzuordnen. Bevorzugt auch in den Weg der genannten Sekundärströmungen Weiter bevorzugt durch unmittelbare Anbindung der feuchtigkeitsspeichernden Elemente an die genannten Latentwärmespeicherkörper. Derartige Elemente können zum Feuchtigkeitsaustausch etwa Silicagel und/oder Bimsstein und/oder Schaumstoff aufweisen oder hieraus bestehen. Weiter können sie auch durch feuchtigkeitsaufnehmende Putze gegeben sein. Diese können bspw. als Putzschicht auf die Außenseite eines Latentwärmespeicherkörpers aufgebracht sein.

Zusätzlich zu den vorgeschriebenen Maßnahmen ist auch noch das bauphysikalische Verhalten des Gebäuderaumes, vor allem hinsichtlich Transmission und Infiltration, Verlust/Gewinn von Wärme nach/von außen und die Sonneneinstrahlung von Bedeutung. Hier können zusätzliche noch entsprechende Maßnahmen vorgesehen sein bzw. die erforderlichen Materialien angepasst ausgesucht sein. Auch ist von Bedeutung die (dezentrale) Luftbehandlungsinstallation.

Aufgrund der Optimierung des bauphysikalischen Verhaltens eines Raumes, der raumgebundenen Klimainstallation, einem wesentlichen Einsatz von Latentwärmespeicherkörpern und eventuellen Feuchtigkeitsspeichern und eines adiabatischen Kühlprozesses ist eine autarke Raumklimatisierung realisierbar. Eine zusätzliche mechanische (Einsatz von Elektroenergie) Kühlung und/oder Heizung ist nicht mehr nötig. Die nur noch erforderlichen Ventilatoren können durch Elektrizität aus gebäudegebundenen Windturbinen oder photovoltaischen Sonnenzellen angetrieben werden.

Insbesondere ist auch von Bedeutung, dass durch die Wahl einer einzigen Phasenwechseltemperatur des Latentwärmespeichermaterials, beispielsweise 21°C, es möglich ist, einen Gebäuderaum mit ein und demselben Phasenwechselmaterial zu kühlen und zu heizen. Es ist nicht einmal erforderlich, für Sommerund Winterbetrieb die Latentwärmespeicherkörper wegen unterschiedlich erforderlicher Phasenwechseltemperatur auszutauschen. Gebäud gemäß Anspruch 11 sind bereits in vielfältiger Weise verwirklicht worden. Entsprechend den eingangs ausgeführten Aspekten ist für ein solches Gebäude aber weiterhin das Bestreben gegeben, ein möglichst angenehme Raumklima bei Zufuhr von möglichst wenig gesonderter Energie zu erreichen.

In diesem Zusammenhang schlägt die Erfindung vor, dass innerhalb des Raumes zugeordnet einer Raumdecke Latentwärmespeicherkörper angeordnet sind und dass die Zu- und/oder Abluft mittels der Latentwärmespeicherkörper in ihrem Wärmegehalt verändert wird. Dies bedeutet, dass die Zu- und/oder Abluft in einen Wärmetausch (auch) mit den Latentwärmespeicherkörpern tritt. Wenn es auch bereits bekannt ist, etwa in Kombination mit Heizkörpern, Latentwärmespeicherkörper ansonsten in einem Raum anzuordnen, wird hier bewusst die Luft bei Eintritt in den Raum (Zuluft) bzw. ggf. auch vor Austritt aus dem Raum (Abluft) in den Wärmetausch mit den Latentwärmespeicherkörpern gebracht. Dieser Wärmetausch kann zum einen durch unmittelbares Entlangströmen der Zu- und/oder Abluft an den Latentwärmespeicherkörpern erreicht werden. Er kann aber auch, wobei entsprechend auch Zwischenformen möglich sind, durch von der Zu- und/oder Abluft induzierte Sekundärströmungen erreicht werden.

Die Latentwärmespeicherkörper können, wie hinsichtlich deren gegenständlicher Ausbildung auch bereits ausgeführt, bevorzugt als plattenartige Kassetten geformt sein. Sie können in einer ebenen Erstreckung parallel zur Raumdecke und abgelängt von der Raumdecke angeordnet sein. Insbesondere auch in Form mehrerer Latentwärmespeicherkörper-Kassetten übereinander. Sie können aber auch senkrecht zur Raumdecke, gleichwohl der Raumdecke zugeordnet, hängend angeordnet sein ("Baffle-Anordnung"). Zudem können sie abweichend von einer streng ebenen Plattengeometrie auch gekrümmt verlaufend, bspw. segelartig gekrümmt, gestaltet sein. Zumal sich hierdurch vorteilhafte Luftströmungen erreichen bzw. unterstützen lassen.

Nachstehend wird die Erfindung des Weiteren anhand der beigefügten Zeichnung, die jedoch lediglich Ausführungsbeispiele betrifft, näher erläutert. Hierbei zeigt
- Fig.1: eine schematische Darstellung eines einzelnen Gebäuderaumes mit natürlicher Lüftung;
- Fig. 2: eine schematische Darstellung einer Luftführung in einem Gebäuderaum bei herkömmlicher Luftkonditionierung außerhalb des Gebäu-. deraumes;
- Fig. 3: eine Luftkonditionierung eines Gebäuderaumes gemäß Fig. 2, jedoch geeignet zur Luftkonditionierung praktisch ohne Fremdenergie;
- Fig. 4: eine weitere schematische Darstellung einer Lüftführung eines Gebäudes mit mehreren Räumen, jedoch lediglich erläutert anhand der Luftführung in einem Raum;
- Fig. 5: eine Einzelheit der Luftführung in Bezug auf die Latentwärmespeicherkörper;
- Fig. 6: die Einzelheit einer Anordnung von Latentwärmespeicherkörpern;
- Fig. 7: eine gegenüber Fig. 4 abgewandelte Ausführungsform;
- Fig. 8: ein weiteres abgewandeltes Anlagenschema, etwa entsprechend Fig. 4, wobei insbesondere noch strömungsbeeinflussende Klappern hinsichtlich der Luftwege zwischen den übereinander angeordneten Latentwärmespeicherkörpern vorgesehen sind;
- Fig. 9: eine schematische Querschnittsansicht eines Latentwärmespeicherkörpers, wobei zwei verschieden Füllungen angedeutet sind;
- Fig. 10: eine schematische Querschnittsansicht eines Wärmepufferelementes;
- Fig. 11: eine schematische Darstellung eines Konditiorderangsraumes mit im Lüftungsweg dann zu durchströmendem Gebäuderaum;
- Fig. 12: eine Ausführungsform entsprechend Fig. 11, in weiterer Abwandlung;
- Fig. 13: Darstellung einer Luftführung;
- Fig. 14: Luftführung oberhalb einer Latentwärmespeicher-Decke, und
- Fig. 15: Luftführung mit Ausblasung und Absaugung entlang Ober- bzw. Unterseite von Latentwärmespeicherkörpern.

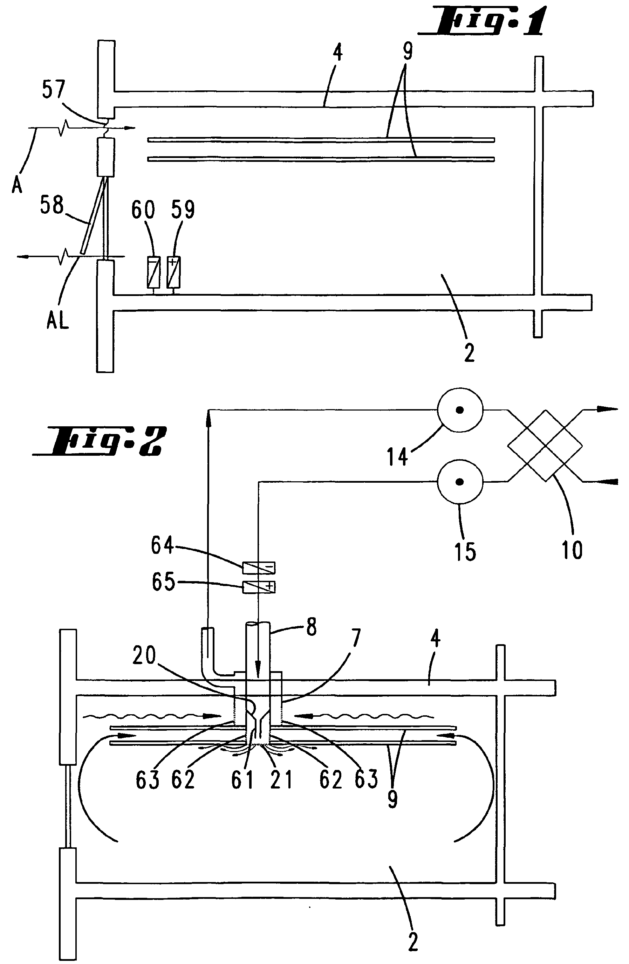

Dargestellt und beschrieben ist zunächst mit Bezug zu Fig. 1 ein Gebäuderaum 2, der auf herkömmliche, natürliche Art be- und entlüftet wird. So ist schematisch eine Belüftungsöffnung 57, die zugleich eine Zuluft-Führung dargestellt und wodurch sich im Rauminneren eine Zuluft-Strömung 0 ergibt, dargestellt, durch welche, bevorzugt ohne gesonderte Steuerung oder Regelung, Außenluft A in den Gebäuderaum 2 einströmt. Zugeordnet einer Decke 4 des Gebäuderaumes 2 sind, bevorzugt deckenparallel, Latentwärmespeicherkörper 9 angeordnet. Bei dem Ausführungsbeispiel sind die Latentwärmspeicherkörper 9 in zwei Ebenen übereinander angeordnet, wobei die Zuluftöffnung 57 und damit auch die Zuluft-Führung, im Bereich der Erstreckungsebenen der Lätentwärmespeicherkörper 9, bevorzugt, wie ersichtlich, oberhalb des obersten Latentwärmespeicherkörpers 9, ausgebildet ist Gerade bei einem derartigen auf natürlicher Luftströmung beruhenden System ist von Bedeutung, dass die Außeiluft A bei Einströmen in den Gebäuderaum 2 an den Latentwärmespeicherkörpern 9 entlangströmt oder jedenfalls solche Sekundärströmungen induziert, die zu einem Entlangströmen von Raumluft an den Latentwärmespeicherkörpem 9 führen und so die Konditionierung der Raumluft (mit) ermöglichen. Denn von Bedeutung ist auch der Strahlungswärmeaustausch der Seitenwände und des Bodens des Gebäuderaumes 2 mit den Latentwärmespeicherkörpern 9.

Der Strahlungswärmeaustausch ist bei allen Ausführungsformen von Bedeutung. In diesem Zusammenhang ist insbesondere auch von Bedeutung, dass die Latentwärmespeicherkörper 9 einen bestimmten Anteil der Decke 4 abdecken, weil dies auch ein Maß dafür ist, mit welchem Anteil des Bodens und der Seitenwände sie in Strahlungswärmeaustausch stehen. Dieser Anteil liegt bevorzugt über einem Drittel der Deckenfläche, weiter bevorzugt über der Hälfte der Deckenfläche und darüber hinaus bevorzugt über Zweidrittel der Deckenfläche.

In weiterer Einzelheit bezüglich der Ausführungsform der Fig. 1 ist vorgesehen, dass Raumluft den Gebäuderaum 2 über natürliche Öffnungen oder bei üblicher Lüftung, etwa mittels Öffnung von Fenstern 58, verlässt Dies ist durch den mit AL bezeichneten Pfeil angedeutet.

Weiter ist bei dieser Art der Raumluftkonditionierung, eines einzelnen Gebäuderaumes 2, von Bedeutung dass innerhalb des Gebäuderaumes 2 ein gesondertes Heizelement 59 und/oder ein gesondertes Kühlelement 60 vorhanden ist. Das Heizelement kann ein üblicher Warmwasserheizkörper sein. Beispielsweise ein Radiatorheizkörper. Das Kühlelement 60 kann ein übliches ortsfestes oder auch transportables Kühlaggregat sein.

Hinsichtlich der Auslegung eines solchen Konditionierungssystems kann man, bezüglich Heizungsbedarf, von Folgendem ausgehen: Wenn der Gesamtwärmebedarf mit dreihundert Wärmeeinheiten angenommen wird, kann durch die Latentwärmespeicherkörper 9 ein Anteil von fünfzig bis einhundertundfünfzig Wärmeeinheiten beigesteuert werden und durch ein Heizelement 59 der fehlende Anteil von einhundertundfünfzig bis zweihundertundfünfzig Wärmeeinheiten. Bevorzugt ist es, die Latentwärmespeicherkörper 9 so auszulegen, dass sie einhundert Wärmeeinheiten beisteuern und ein Heizelement 59 zweihundert Wärmeeinheiten.

Bezüglich Kühlung ist die Auslegung bevorzugt derart vorgesehen, dass die Latentwärmespeicherkörper 9 sechzig bis einhundertundsechzig Kälteeinheiten beisteuern, ein Kühlelement 60 zehn bis einhundertundzehn Kälteeinheiten, bei einem Bedarf von insgesamt einhundertundsiebzig Kälteeinheiten. Bevorzugt ist hierbei, dass die Latentwärmespeicherkörper 9 einhundertundzehn Kälteeinheiten beisteuern, dagegen ein Kühlelement 60 sechzig Kälteeinheiten.

Während also bezüglich Heizung die Latentwarmespeicherkörper ein Fünftel bis zur Hälfte der Heizleistung eines Heizelementes 59 beisteuern, steuern die Latentwärmespeicherkörper 9 bezüglich Kühlung die Hälfte bis zum Sechsfachen eines Kühlelementes 60 bei.

Bei der Ausführungsform der Fig. 2 handelt es sich um die Raumluftkonditionierung eines Gebäuderaumes 2 in einem größeren Gebäude, mit einer zentralen Luftaufbereitung. Die Luftaufbereitung ist hier konventionell.

Wie bei den vorhergehenden Ausführungsbeispiel sind nahe der Decke 4 und parallel hierzu Latentwärmespeicherkörper 9 in - bspw. - zwei Ebenen übereinander angeordnet. Es ist jedoch als Zuluft-Führung eine zentrale Luftzuleitung 8 und Luftableitung 7 vorgesehen. Von Bedeutung ist, dass die Luftableitung 9 konzentrisch zu der Luftzuleitung 8 angeordnet ist Hiermit ist bereits ein erster (Gegenstrom-) Wärmetausch der Zuluft gegen die Abluft gegeben. Der Gegenstrom-Wärmeaustausch ist bevorzugt als innerhalb des Gebäuderaumes angeordnet.

In der Zuluftleitung 8 ist weiterhin mit Abstand zu einer Mündung 21 eine Düse 20 ausgebildet. Die Düse 20 besteht in einer trichterartigen Verjüngung. Der Verjüngungsabschnitt 61 ist weiterhin aber noch mit radialem Abstand von einem Leitungsfortsatz 62 umgeben. Der Leitungsfortsatz 62 weist Einlassöffnungen 63 auf, um hierdurch Raumluft anzusaugen. Und zwar insbesondere Raumluft, die entlangstreichend an den Latentwärmespeicherkörpern 9 in den Leitungsfortsatz gelangt. Weiter bevorzugt solche Raumluft, die zwischen zwei übereinander angeordneten Latentwärmespeicherkörpern 9 zuvor entlanggestrichen ist. Dies ist dadurch erreicht, dass die Einlassöffnungen 63 oberhalb eines, bevorzugt aller, vertikal übereinander befindlichen Latentwärmespeicherkörpern 9 angeordnet sind. Sie können auch sich nach unten so weit erstrecken, dass sie auf den Latentwärmespeicherkörpern aufliegen.

Die Mündung 21 weist ein Leitblech auf, das die austretende Luft in Richtung der Erstreckung der Latentwarmespeicherkörper 9 ableitet. Hierdurch lässt sich auch in geeigneter Weise die gewünschte Sekundärluftströmung induzieren.

In die Zuluftleitung 8 ist weiter ein Kühlaggregat 64 und ein Heizaggregat 65 integriert. Hiermit kann eine zusätzliche Kühlung und zusätzliche Heizung der Zuluft vorgenommen werden. Weiter sind in an sich bekannter Weise in der Zuluftleitung und der Abluftleitung Gebläse 14, 15 vorgesehen. Darüber hinaus ist die Zuluft und die Abluft in einem Wärmetauscher 10 geführt.

Wenn man einmal unterstellt, dass der Wärmetauscher 10 einen Wirkungsgrad von 50% aufweist, ergeben sich bei Kühlung bzw. Heizung die folgenden Gegebenheiten:
Im Falle der Kühlung können die Latentwärmespeicherkörper 9 so ausgelegt sein, dass sie eine Leistung von einhundertundzehn ergeben. Es ist dann noch eine Zusatzkühlleistung von fünfzig Einheiten erforderlich, so dass man auf eine Gesamtkühlleistung, wie gefordert, von einhundertundsechzig Einheiten kommt.

Beim Heizen können die Latentwärmespeicherkörper 9 eine Heizleistung von einhundert Einheiten erbringen. Eine Zusatzheizleistung von weiteren einhundert Einheiten ist über das Heizelement 65 zu erbringen, um auf eine Gesamtheizleistung von zweihundert Einheiten zu kommen.

Wählt man den Wärmetauscher mit einem Wirkungsgrad von 90%, dann verringert sich im Fall der Kühlung die erforderliche Zusatzleistung auf dreißig Einheiten und im Fall der Heizung ist gar keine Zusatzleistung mehr erforderlich.

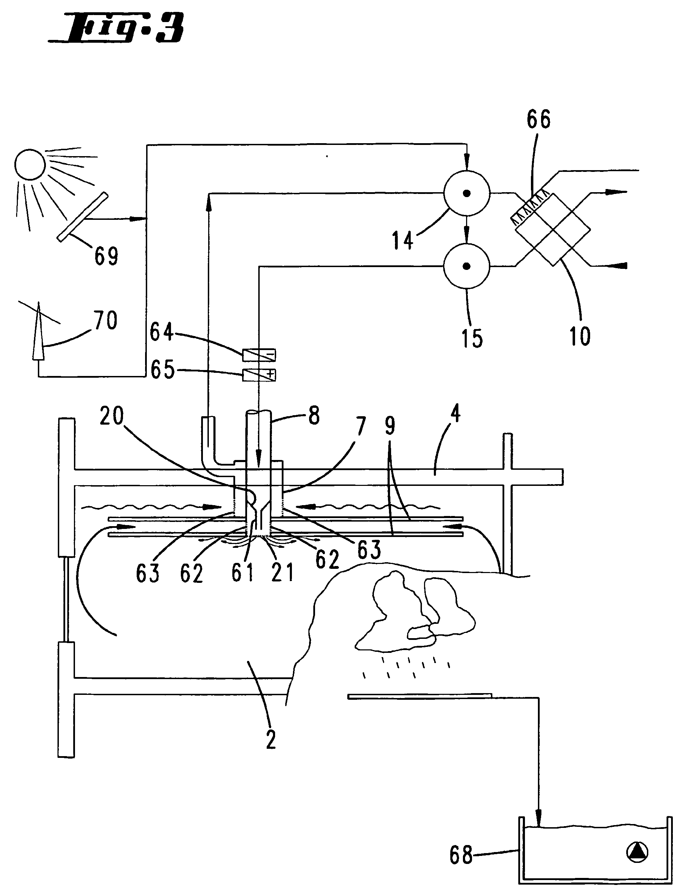

Die Ausführungsform der Fig. 3 entspricht der Ausführungsform der Fig. 2, wobei hier jedoch noch weitere Anstrengungen unternommen sind, um eine autarke Raumluftkonditionierung zu erreichen.

Im Unterschied zu der Ausführungsform der Fig. 2 ist eine adiabatische Kühlung 66 vorgesehen. Hierzu wird zuvor Regenwasser 67 in einer Zisterne 68 aufgefangen und bei Bedarf in die Abluft vor Durchsetzen des Wärmetauschers 10 eingedüst. Über die Wasserverdampfung ergibt sich ein gewünschter Kühleffekt, der eine geeignete Kühlung der Außenluft zulässt.

Um weiterhin auch noch erforderliche Elektroenergie, insbesondere für die Ventilatoren 14, 15, zu erreichen, sind Solarzellen 69 vorgesehen und/oder Windräder 70. Auf diese Weise lässt sich eine Raumluftkonditionierung erreichen, bei der sowohl im Sommer- wie im Winterbetrieb auf zusätzliche Heizung oder Kühlung verzichtet werden kann. Die Elemente 64, 65 brauchen insoweit gar nicht eingebaut zu werden.

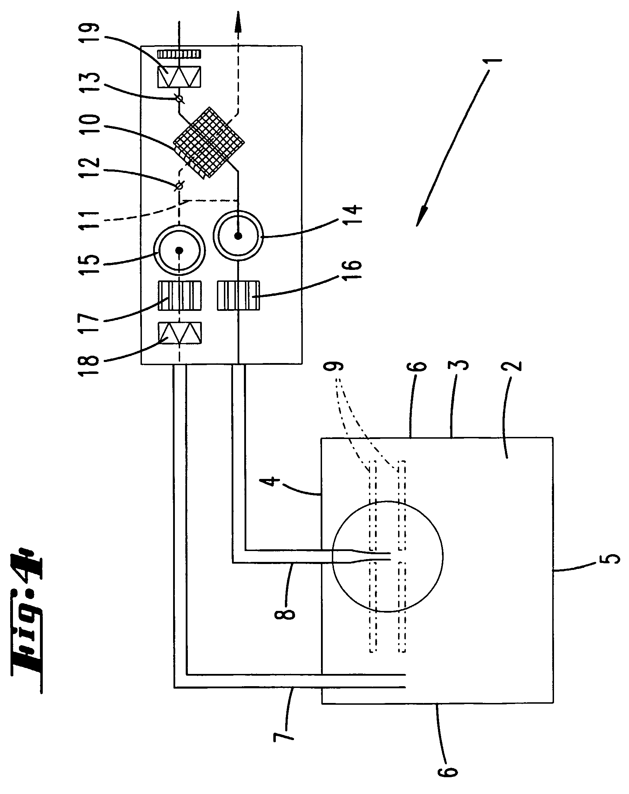

Mit Bezug auf die Ausführungsform der Fig. 4 ist auch ein Lüftungssystem 1 bezüglich eines in weiterer Einzelheit nicht dargestellten Gebäudes beschrieben, das mehrere Gebäuderäume aufweist. Ein Gebäuderaum 2 ist abstrakt durch eine Raumgrenze 3 wiedergegeben.

Der Gebäuderaum 2 weist eine Decke 4, einen Boden 5 und Seitenwände 6 auf. In einer oder mehreren der Seitenwände 6 können auch Fensterflächen gegeben sein.

In den Gebäuderaum 2 münden, beim Ausführungsbeispiel durch die Decke 4, eine Luftableitung 7 und eine Luftzuleitung 8.

In dem Gebäuderaum 2, jedoch zugeordnet der Decke 4, sind weiter Latentwärmespeicherkörper 9 angeordnet Es handelt sich um plattenförmige Latentwärmespeicherkörper. Zur möglichen Ausgestaltung im Einzelnen solcher Latentwärmespeicherkörper wird auch auf einen Stand der Technik gemäß der EP 1108 193 B1 und der EP 983 474 B1 verwiesen.

Außerhalb des Raumes 2 wird die Zu- und Abluft durch einen Wärmetauscher 10 geleitet der bspw. auch zur Taupunktunterschreitung ausgebildet sein kann.

Raumseitig zu dem Wärmetauscher 10 ist eine Bypassleitung 11 ausgebildet, In der Abluftleitung 7 ist zwischen dem Abzweig zur Bypassleitung 11 und dem Wärmetauscher 10 ein Absperrventil 12 angeordnet. Des Weiteren ist in der Zuluftleitung 8 in Strömungsrichtung vor dem Wärmetauscher 10 gleichfalls ein Absperrventil 13 angeordnet. So kann bei Sperrung beider Absperrventile 12,13 ein reiner Umluftbetrieb gefahren werden.

Zudem sind natürlich jegliche Zwischenstellungen möglich. Das heißt, dass ein größerer Teil der Luft im Umluftbetrieb gefahren wird und ein kleinerer jeweils zugespeist wird und umgekehrt.

Zur Ausbildung einer Zuluft- bzw. Abluft-Strömung sind weiter Gebläse 14, 15 in die Zu- bzw. Abluftleitung eingeschaltet. Darüber hinaus kann auch in üblicher Weise mittels Kühl- oder Heizaggregate 16, 17 und Befeuchtungseinrichtungen 18,19 eine Kühlung und/oder Erwärmung und/oder Befeuchtung des jeweiligen Luftstromes vorgenommen werden.

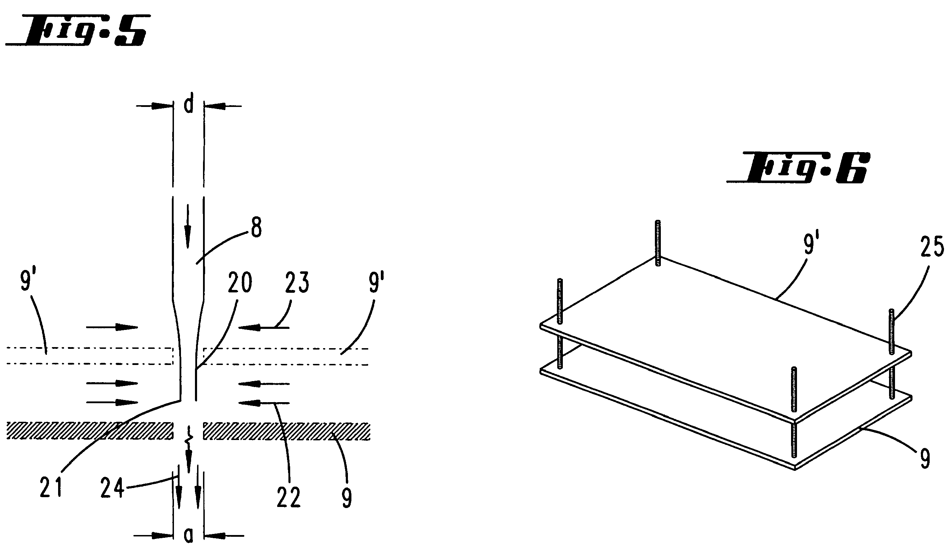

Wie in weiterer Einzelheit ersichtlich ist, insbesondere aus der Darstellung gemäß Fig. 5, ist die Mündung der Zuluftleitung 8 besonders ausgestaltet Es ist eine Düse 20 vorgesehen, die unter Querschnittsreduzierung bezüglich des Querschnitts der Leitung 8 eine Beschleunigung der in den Gebäuderaum 2 austretenden Zuluft erbringt.

Es sind beim Ausführungsbeispiel vier Latentwärmespeicherkörper 9, in plattenartiger Ausgestaltung, vorgesehen. Die Latentwärmespeicherkörper 9 sind im Bereich der Mündung der Zuluftleitung 8 voneinander horizontal beabstandet. Und zwar um ein Maß, das am Durchmessermaß der Zuluftleitung 8 vor der Düse 20 orientiert ist. Wie ersichtlich entspricht das Abstandsmaß a der Latentwärmespeicherkörper 9 beim Ausführungsbeispiel dem Durchmesser d der Zuluftleitung 8. Letzteres besagt allerdings nicht, dass die Zuluftleitung einen kreisförmigen Querschnitt haben muss. Es kann sich auch um die Abmessung einer Schmal- oder Langseite eines Rechteckquerschnittes der Zuluftleitung 8 etwa handeln. Das Abstandsmaß a ist bevorzugt kleiner als 30 cm, weiter bevorzugt kleiner als 20 cm.

Die Düse 20 weist eine Mündung 21 auf, die beim Ausführungsbeispiel oberhalb von zwei horizontal einander zugeordneten Latentwärmespeicherkörpern 9 ausgebildet ist. Zugleich ist sie aber auch, was jedenfalls bevorzugt ist, unterhalb von zwei weiteren Latentwärmespeicherkörpern 9', die gleichfalls horizontal einander zugeordnet sind und vertikal den Latentwärmespeicherkörpern 9 übergeordnet sind, ausgebildet. Hierdurch ergibt sich eine Sekundärströmung, welche durch die Pfeile 22, 23 angedeutet ist. Eine an den Latentwärmespeicherkörpern 9, 9' in Richtung auf die Düse 20 bzw. den sich daran anschließenden, durch die Pfeile 24 angedeuteten Zuluftstrom gerichtete Sekundärströmung, die an den Latentwärmespeicherkörpern 9 entlangstreicht, stellt sich ein. Sie wird dort je nach Belastungsfall mit Wärme beladen bzw. gibt Wärme ab, so dass sie gekühlt in den Zuluftstrom eintritt. Dadurch, dass diese Vorgänge sich an der Raumdecke abspielen, ergibt sich eine genügend lange Verwirbelungsstrecke bis zu den hinsichtlich des Komforteindrucks einer Raumbelüftung wesentlichen, sich im Gebäuderaum befindlichen Personen.

In weiterer Einzelheit ist Fig. 6 zu entnehmen, dass die plattenartigen Latentwärmespeicherkörper 9, 9' mittels ihren Eckbereichen zugeordneter Befestigungselemente 25 miteinander verbunden sein können. Mittels derselben Befestigungselemente 25 können sie dann auch, was in Fig. 6 nicht in weiterer Einzelheit dargestellt ist, an der Raumdecke 4 befestigt sein.

Es handelt sich ersichtlich um stabförmige Befestigungselemente. In einfachster Ausgestaltung kann es sich hierbei um Spindelelemente handeln, welche ein selbsthemmendes Gewinde aufweisen. An den Spindeln befestigte Muttern können etwa als Auflage für eine Latentwärmespeicherplatte 9' oder 9 dienen. Dies lässt auch eine einfache Verstellung zu. Wenn die Durchtrittsöffnungen in den Eckbereichen der Latentwärmespeicherplatten 9, 9' eine entsprechende Größe aufweisen, ist es so auch möglich, diese Latentwärmespeicherkörper abweichend von einer streng horizontalen Anordnung zueinander geneigt auszurichten. Dies kann hinsichtlich der gewünschten oder sich einstellenden Sekundärströmungen vorteilhaft sein.

Unabhängig von den durch den Zuluftstrom bei dem Ausführungsbeispiel induzierten Sekundärströmungen können sich auch weitere Sekundärströmungen durch eine treibende Temperaturdifferenz im Raum, zwischen einer Raumtemperatur und einer Latentwärmespeicherplattentemperatur einstellen. Dies jedenfalls dann, wenn die Latentwärmespeichertemperatur niedriger ist als die Raumtemperatur. So generierte kalte Luft wird tendenziell nach unten fallen und warme Luft entsprechend nach oben wirbeln.

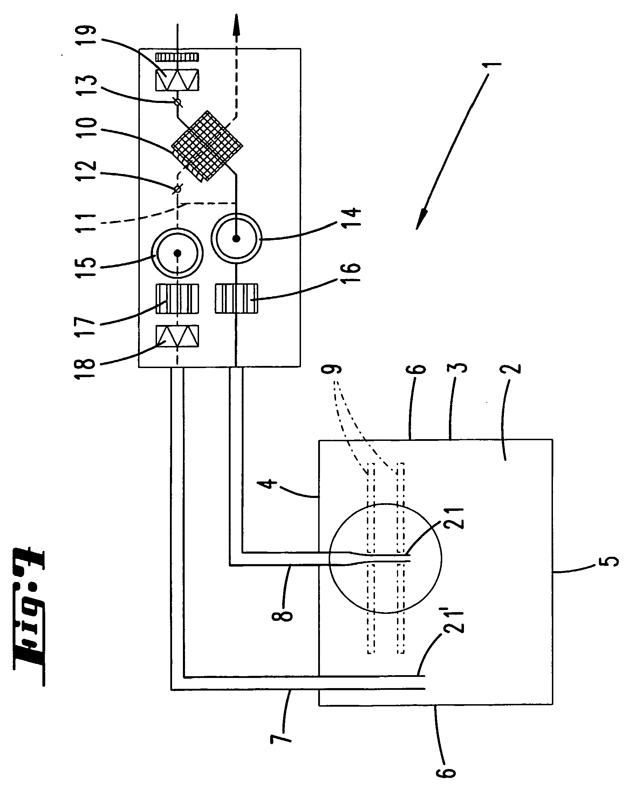

Beim Gegenstand der Fig. 7 handelt es sich um ein grundsätzlich gleiches Anlagenschema wie zu Fig. 4 beschrieben. Die Bezugszeichen sind übernommen und stellen gleiche Teile und Zusammenhänge dar, soweit nachstehend nicht etwas anderes beschrieben ist.

Wesentlich ist, dass bei der Ausführungsform der Fig. 7 die Mündung 21 der Luftzuleitung 8 wie auch eine Mündung 21' der Luftableitung 7 sich unterhalb eines Höhenniveaus der Latentwärmespeicherkörper 9 befinden. So ist praktisch keine Strömungsbeeinflussung der Luft Bezüglich der Latentwärmespeicherkörper 9 gegeben. Mit Ausnahme etwa von sich zirkulierend ergebenden Sekundärströmungen im Raum allgemein.

Bei diesem Anlagenschema ist auch die höhenmäßige Anordnung der Mündung 21' der Abluftleitung 7 erst von nachrangiger Bedeutung. Diese könnte auch höher angeordnet sein, bei Anordnung der Mündung 21 gleichwohl unterhalb des Höhenniveaus der Latentwärmespeicherkörper 9, eben wie dargestellt

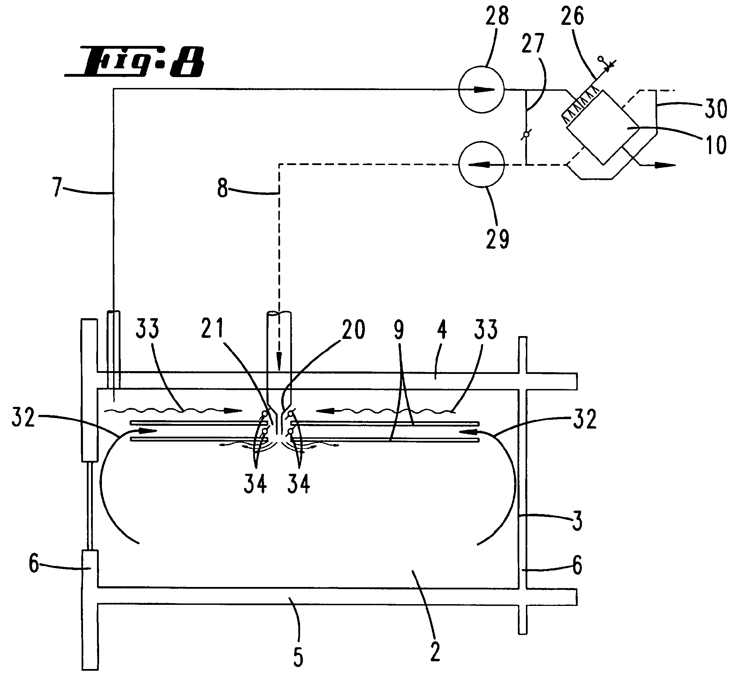

Auch beim Gegenstand der Fig. 8 sind gleiche Teile wie beim Gegenstand der Fig. 4 mit gleichen Bezugszeichen versehen.

Zu dem Anlageschema allgemein ist zunächst auszuführen, dass in der Abluftleitung 7 einer Befeuchtungseinrichtung 26 vorgesehen ist. Die Befeuchtung der Abluft ermöglicht eine adiabatische Kühlung der Abluft. In dem nachfolgenden Wärmetausch mit der Zuluft kann dieser dann - soweit gewünscht - zu Kühlungszwecken hierdurch Wärme entzogen werden. Weiter ist zwischen der Luftableitung 7 und der Zuluftleitung 8 ein Bypass 27 vorgesehen, dies strömungsmäßig hinter (bezogen auf Luftableitung 7) einem in die Luftableitung 7 eingebauten Abluftventilator 28 und strömungsmäßig von einem in die Zuluftleitung 8 eingesetzten Zuluftventilator 29. Des Weiteren ist eine Bypassleitung 30 vorgesehen, von der Außenluftleitung 31 unter Umgehung des Wärmetauschers 10 zur Zuluftleitung 8. Der Wärmetauscher 10 ist hier als reiner sensibler Wärmetauscher ausgelegt Es kann sich aber auch um einen rekuperativen Wärmetauscher handeln. Er hat bspw. einen Wirkungsgrad etwa von 80% (bei Normbedingungen).

Von weiterer Bedeutung ist, dass zugeordnet der Düse 20 bezüglich der zwischen den Latentwärmespeicherkörpern 9 oder oberhalb eines Latentwärmespeicherkörpers 9 und der Gebäudedecke 4 ausgebildeten Strömungswegen 32, 33 Regulierungsklappen 34 vorgesehen sind. So kann die sich in den Zuluftstrom einmischende Luftströmung vorteilhaft reguliert werden.

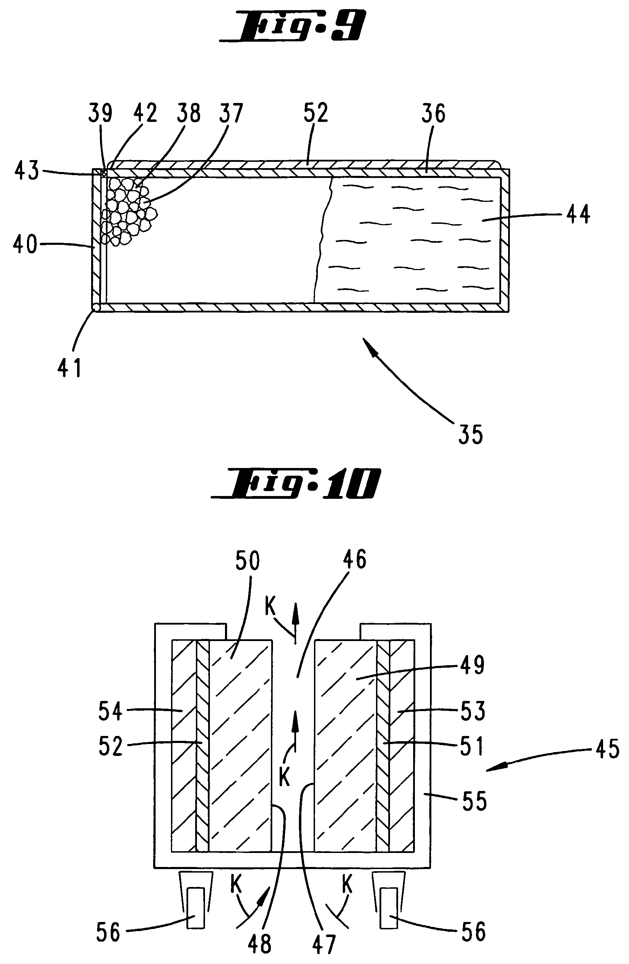

Unter Bezug auf Fig. 9 ist ein Latentwärmespeicherkörper als solches, wie er hier bevorzugt zur Anwendung kommt, dargestellt. Ein Latentwärmespeicherkörper, insgesamt mit dem Bezugszeichen 35 versehen, weist eine Halterungsaußenwandung 36 auf. Im Querschnitt, wie dargestellt, weist die Halterungsaußenwandung 36 bspw. ein Rechteckprofil auf. Bevorzugt ist die Halterungsaußenwandung aus einem Metall bzw. Metallblech gebildet

Gemäß einer ersten Ausführungsform sind innerhalb der geschlossenen Halterungsaußenwandung 36 eine Vielzahl von Latentwärmespeicherteilkörpern 37 angeordnet. Die Anordnung ist derart, dass sich eine vollständige Füllung des Innenraumes, der durch die Halterungsaußenwandung 36 umschlossen ist, ergibt Lediglich mit der Ausnahme, dass zwischen den Latentwärmespeicherteilkörpern 37 zu Strömungswegen führende Lufträume 38 verbleiben. Denn wenn es zu einer unterschiedlichen Entladung des Latentwärmespeicherkörpers an einer der Außenflächen kommt, ergibt sich eine Luftströmung im Inneren des Latentwärmespeicherkörpers, die zu einem raschen Wärmetransport und damit Wärmeausgleich zwischen unterschiedlich belasteten Bereichen des Latentwärmespeicherkörpers führt.

Weiter ist von Bedeutung, dass die Halterungsaußenwandung 36 eine dichtungsverschlossene Öffnung 39 aufweist. Beim Ausführungsbeispiel ist eine Öffnungsklappe 40, die einen Teil der Halterungsaußenwandung 36 bildet, dargestellt. Diese Klappe 40 ist an einem Scharnier 41 angelenkt. An einer Stirnfläche 42 der zugeordneten Halterungsaußenwandung ist eine umlaufende Dichtung 43 angeordnet. Eine geeignete Rastverschließung ist vorgesehen, jedoch zeichnerisch nicht weiter dargestellt Die dichtungsverschließbare Öffnung ist zu Füllung und Entleerung eines solchen Latentwärmespeicherkörpers von Bedeutung. Zudem ist die dichtende Verschließung auch von Bedeutung hinsichtlich der angesprochenen, sich einstellenden Luftströmungen innerhalb des Latentwärmespeicherkörpers. Aber auch dahingehend, dass ein gewisser Druck, ggf. ein Überdruck innerhalb des Latentwärmespeicherkörpers eingestellt und beibehalten werden kann. Dies um einen Dampfdruck des Latentwärmespeichermaterials entgegenzuwirken.

Alternativ zu der Füllung mit Latentwärmespeicherteilkörpern 37 ist auch eine Füllung mit einer homogenen Gelmasse 44, wie im rechten Teil des Latentwärmespeicherkörpers 35 dargestellt, möglich. Weiter kann auf einer Halterungsaußenwandung 36 eine feuchtigkeitsspeichernde Schicht 52 angeordnet sein.

Der Gegenstand der Fig. 10 zeigt ein Wärmepufferelement 45 auf Latentwärmebasis für eine Raumluftkonditionierung. Derartige Wärmepufferelemente sind bspw. von Bedeutung in Räumen, in welchen große Wärmemengen durch elektrische Maschinen oder auch EDV-Anlagen anfallen, mitunter auch zeitlich sehr begrenzt anfallen und dann nicht zu einer plötzlichen Aufheizung des Raumes führen sollen. Von Bedeutung ist, dass ein kaminartiger Luftströmungsweg 46 zwischen sich gegenüberliegend angeordneten Latentwärmespeicher-Kaminaußenflächen 47,48 gegeben sind. Beim Ausführungsbeispiel handelt es sich um die Außenflächen zweier Latentwärmespeicherkörper 49, 50, die grundsätzlich entsprechend dem in Fig. 9 dargestellten und diesbezüglich beschriebenen Latentwärmespeicherkörper 35 ausgebildet sein können.

Die Querschnittsdarstellung zeigt, dass auch hier ein Rechteckquerschnitt vorliegt Auf den den Flächen 47, 48 abgewandten Seiten kann zunächst jeweils eine feuchtigkeitsspeichernde Schicht 51, 52 vorgesehen sein. Darüber hinaus auch anschließend noch eine Schalldämmschicht 53,54. Bei der Schalldämmschicht kann es sich bspw. um einen Vlieswerkstoff oder einen Schaumstoff, vorzugsweise offenporigen Schaumstoff, handeln. Die gesamte Anordnung ist zusammengehalten und als Einheit gebildet durch ein Rahmengestell 55, das hier lediglich schematisch dargestellt ist. Es handelt sich um einzelne Streben, die zwischen sich genügend Freiraum lassen, um die gewünschte Kaminströmung, angedeutet durch die Pfeile K, sich ausbilden zu lassen und bestehen zu lassen. Weiter aber auch, um den Schall außenseitig an die Schallschutzelemente dringen zu lassen.

Weiter ist bevorzugt, dass Wärmepufferelement 45 insgesamt verfahrbar ausgebildet Beim Ausführungsbeispiel sind hierzu Laufrollen 56 vorgesehen.

Das Wärmepufferelement 45 kann hiermit nicht nur an geeignete Stellen im Raum verfahren werden. Es kann auch zur Entladung bspw. ins Freie oder einen sonstigen Gebäuderaum, etwa einen Gebäuderaum der nach dem vorstehend beschriebenen Verfahren klima-konditioniert ist, verfahren werden.

Darüber hinaus kann ein solches Wärmepufferelement natürlich auch bevorzugt in einem wie vorstehend beschriebenen klima-konditionierten Raum eingesetzt und integrierend benutzt werden.

Des Weiteren kann er nicht nur zur Pufferung einer unerwünscht anfallenden Wärmernenge benutzt werden, sondern auch zum Ausgleich von Kälte oder Kaltlufteinfall, indem er eben als Wärmespender verwandt wird.

Bezüglich der Latentwärmespeicherkörper ist eine Leistung von 3 bis 8 W/m² bevorzugt 8 W/m² vorteilhaft. Die Luftströmung wird so angelegt, dass eine solche Leistung entsteht

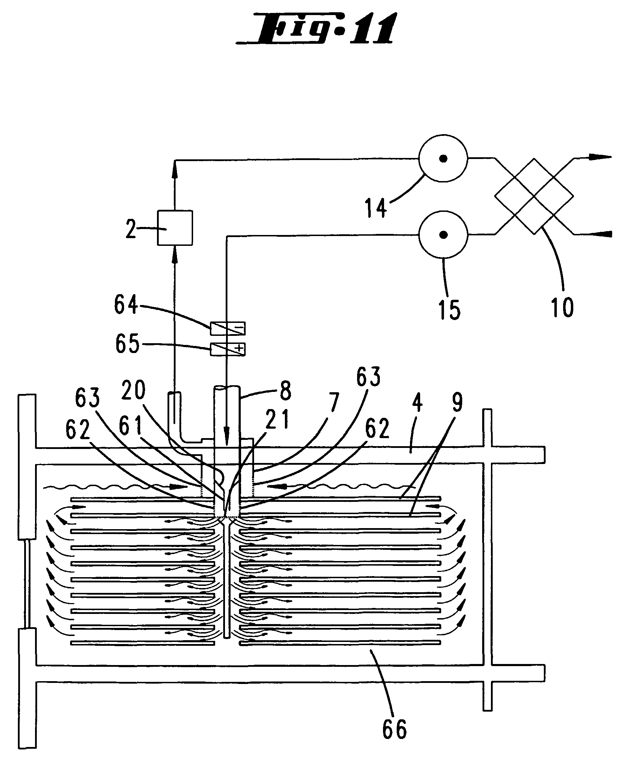

Mit Bezug zu Figur 11 ist nun die alternative Verfahrensweise dargestellt. In einem Konditionierungsraum 66 sind eine Vielzahl von Wärmetauschern 9 angeordnet, beispielsweise über die gesamte Raumhöhe. In der Zeichnung verdeckt, können in dem Raum weiter Freiräume für Gänge vorgesehen sein, in denen eine Wartungs-/Bedienungsperson jeweils Zugang zu den einzelnen Latentwärmespeicherkörpern 9 hat. Im Übrigen kann in dem Konditionierungsraum in gleicherweise wie etwa bezüglich Figur 2 beschrieben eine Zuluft und Abluftführung vorgesehen sein. Nur geht die Abluftführung dann zu einem Gebäuderaum 2, in welchem die Abluft aus dem Konditionierungsraum 26 als Zuluft eintritt und danach erst hieraus abgezogen wieder über beispielsweise den Ventilator 14 und den Wärmetauscher 10 nach außen geführt wird.

Sie kann aber natürlich auch sogleich in mehrere Gebäuderäume 2 einströmen und aus diesen dann zusammengefasst nach außen geführt werden. Desgleichen ist noch eine Mischung mit Außenluft in üblicher Weise möglich.

Es kann sich empfehlen, wie in Figur 11 dargestellt, die Mündung 21 mit entsprechenden Austrittsgittern über praktisch die gesamte Höhe des Konditionierungsraumes 16 vorzusehen, in welchem auch Latentwärmespeicherkörper 9 angeordnet sind.

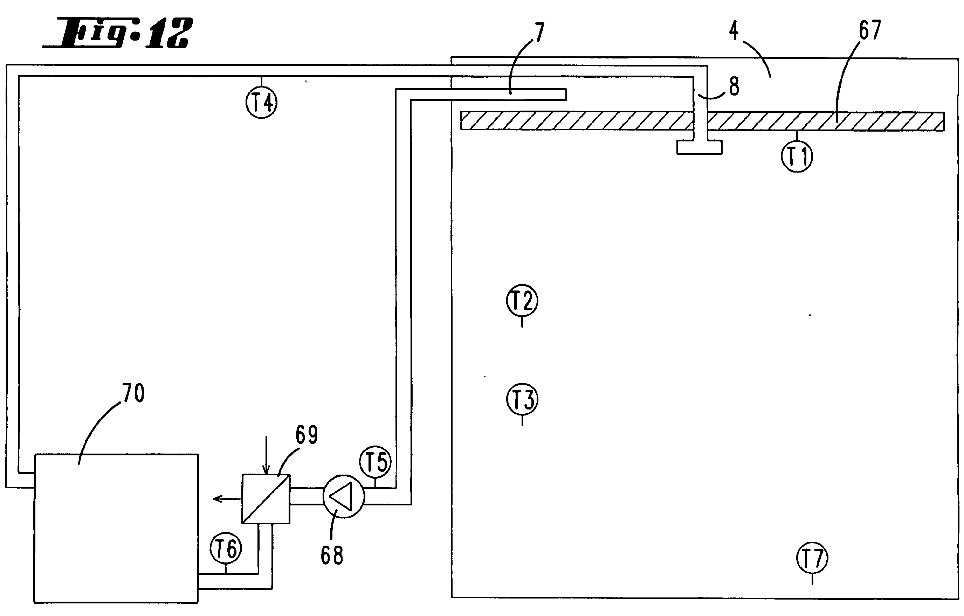

Eine hierzu abgewandelte Ausführungsform ist auch in Figur 12 dargestellt.

Oberhalb einer lediglich - wenn auch vorzugsweise, grundsätzlich können hier auch Latentwärmespeicherkörper angeordnet sein - ausgebildeten Akustikdecke 67, die unterhalb der Gebäuderaumdecke 4 angeordnet ist, ist die Luftabsaugung 7 vorgesehen. Die Luft wird also oberhalb der Akustikdecke 67 aus dem Raum abgesaugt.

Dagegen durchsetzt die Luftzuleitung 8 die Akustikdecke 67. Unterhalb der Akustikdecke 67 wird die Frischluft in den Raum eingeblasen.

Zur Steuerung und Regelung der Luftversorgung werden an verschiedenen Stellen die Temperaturen gemessen. Eine Temperatur T1 unmittelbar unterhalb dem Deckenelement, eine Temperatur T2 in Raumhöhe, 1,5 m über den Boden, eine Temperatur T3 in Raumhöhe, 1 m über den Boden, eine Temperatur T 4 als Zulufttemperatur und eine Temperatur T5 als Ablufttemperatur.

In die Abluftleitung 7 ist weiterhin ein Ventilator 68 angeordnet, welcher seinerseits vor einem Wärmetauscher 69, in dem auch Frischluft zugemischt werden kann, angeordnet ist.

Hinter dem Wärmetauscher 69 und vor einem Latentwärmespeicherkörper 70, der in einem eigenen Raum angeordnet ist, wird noch eine Temperatur T6 gemessen.

In dem Gebäuderaum wird zusätzlich noch eine Temperatur T7 am Boden oder kurz über dem Boden gemessen. Bezüglich des Bodens ist im Übrigen bevorzugt vorgesehen, dass eine zusätzliche Fußbodenheizung installiert ist.

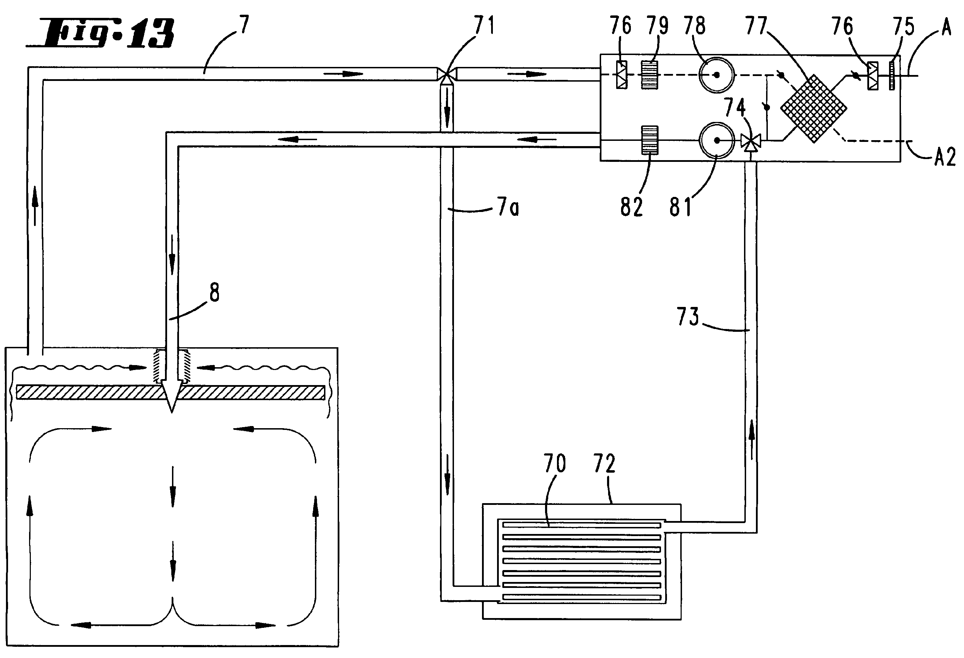

In Fig.13 ist eine weitere detaillierte Darstellung einer Luftführung für einen solchen Raum wiedergegeben.

Gleiche Bezugszeichen bezeichnen gleiche Gegenstände wie insbesondere zu Fig. 12 erläutert.

In der Abluftleitung 7 ist ein Dreiwege-Ventil 71 angeordnet welches den Abluftstrom in einen zu dem Latentwärmespeicher 70 führenden Teilluftstrom 7a und ein letztlich nach außen geführten Teilluftstrom 7b aufteilt. Der Teilluftstrom 7a wird - im Heizungsbetrieb - entlang den oder die Latentwärmespeicherkörper 70, die auch von einer Isolierung 72 (insgesamt) umgeben sind, wieder erwärmt und dann über eine entsprechende Leitung 73 einem weiteren Dreiwege-Ventil 74 zur Zumischung in die Zuluftleitung 8 zugeführt wird.

Die Außenluft A durchsetzt bei dieser Schaltungsanordnung zunächst einen Filter 75, sodann eine Befeuchtungseinrichtung 76 und einen Luft-/Luft-Wärmetauscher 77. In dem Wärmetauscher 77 wird Wärme zu der Abluft AI getauscht, die zuvor - nach dem Dreiwege-Ventil 74 - ebenfalls eine Befeuchtungseinrichtung 76, sodann ein Kühl- bzw. Heizaggregat 79 und einen Ventilator 78 durchsetzt hat.

Bezüglich der Außenluft ist nach dem Wärmetauscher 77 und vor dem Dreiwege-Ventil 74 noch eine Bypassleitung 80. vorgesehen und nach dem. Dreiwege-Ventil 74 durchsetzte die Außenluft mit eventuelle beigemischter, erwärmter Umluft einen Ventilator 81 und ein Kühl-/Heizaggregat 82.

Anstelle des außerhalb des Gebäuderaumes angeordneten Latentwärmespeicherkörpers 70 bei der Anordnung gemäß Fig. 12 kann auch lediglich eine abgehängte Decke mit Latentwärmespeicherkörpern in dem Gebäuderaum vorgesehen sein. Dann ist nach dem Wärmetauscher 69 die Luftführung unmittelbar in die Zuluft übergehend.

Wie zum Ausdruck gebracht, kann in beiden Fällen, der Anordnung gemäß Fig. 12, wie auch ggf. der Anordnung gem. Fig. 13, obwohl hierfür grundsätzlich in dieser Anordnung die Kühl-/Heizaggregate 82 vorgesehen sind, eine zusätzliche Heizung in dem Gebäuderaum, etwa als Fußbodenheizung, vorgesehen sein.

Die in Fig. 13 angedeutete Raum, in dem sich der oder die Latentwärmespeicherkörper 70 befinden, kann je nach Vielzahl der Räume, die auf dieser Art zu versorgen sind, beliebig erweitert werden, ggf. auch um zusätzliche Räume, in denen Latentwärmespeicherkörper 70 angeordnet sind.

Im Fall der abgehängten Decke gemäß Fig. 12, wenn darin Latentwärmespeicherkörper angeordnet sind, kann diese Decke beispielsweise aus einer Stahlblechkonstruktion, Blechdicke etwa zwischen 0,6 und 1,2, bevorzugt 0,8 bis 1 mm Dicke, bestehen. In diesen Stahlblechkassetten können dann die Latentwärmespeicherkörper aufgenommen sein. Beispielsweise kann es sich um die bereits erwähnten Latentwärmespeicherkörper mit einer Schaumstoff-Basis, etwa mit Melaminharzschaumstoff-Basis handeln, der mit dem Latentwärmespeichermaterial getränkt ist. Die Dicke der so gebildeten Latentwärmespeicherkörper kann 5 bis 45 mm betragen und ein Gewicht von 4 bis 45 kg pro Quadratmeter aufweisen.

Auch können die so gebildeten Latentwärmespeicherkörper mit einer dampfdiffusionsdichten Folie, etwa einer Aluminiumfolie, umgeben sein.

Das Raumgewicht eines solchen Latentwärmespeicherkörpers kann im Bereich von 1000 kg pro Kubikmeter liegen.

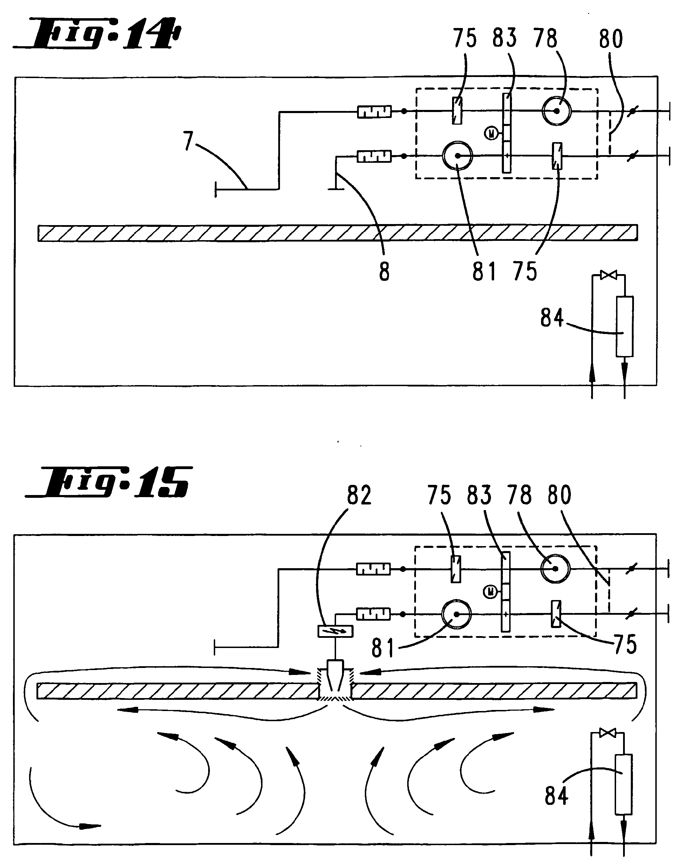

Eine derartige Luftschaltung ist in Fig. 14 dargestellt Hinsichtlich der Abluft 7 und der Zuluft 8 kann auch grundsätzlich auf die weiteren Erläuterungen etwa in Fig. 12 verwiesen werden.

Wesentlich ist, dass zwischen der Zuluftleitung 8 und der Abluftleitung 7 noch ein regenerativer Wärmetauscher 83 eingeordnet ist, der zwischen Zuluft und Abluft Wärme wie auch Feuchte überträgt.

Eine Zusatzheizung für den Gebäuderaum ist bei 84 angedeutet. Im Übrigen sind gleiche Aggregate mit dem Bezugszeichen aus Fig. 13 bezeichnet.

Von Besonderheit ist auch, dass sowohl die Abluft wie auch die Zuluft oberhalb der abgehängten Decke zugeführt wird.

In der Zuluftleitung kann weiter noch, was in Fig. 14 nicht dargestellt ist, vor Eintritt in den Gebäuderaum eine Zusatzheizung entsprechend Bezugszeichen 82 in Fig. 13 angeordnet sein. Zudem kann vor Durchsetzen der Aggregate zwischen der Zuluft und der Abluftleitung auch noch eine Bypassleitung 80, die wegen des optionalen Charakters in Fig. 14 nur gestrichelt dargestellt ist, vorgesehen sein. Die Ausführungsform nach Fig. 15 entspricht grundsätzlich der Ausführungsform gemäß Fig. 14.

Nur ist hier, vergleichbar auch der Ausführungsform der Fig. 13, eine unterhalb der Latentwärmespeicherkörper-Decke vorgesehene Induktionslüftung angeordnet.

Von Besonderheit ist für die Induktionslüftung, dass der Luftauslass entlangstreichend an der Unterseite der abgehängten Decke bzw. der darin vorgesehenen Latentwärmespeicherkörper vorgesehen ist So wird Gebrauch gemacht von dem sogenannten Koanda-Effekt.

Diese Gestaltung kann für alle gezeigten Ausführungsbeispiele, wo die Luft unterhalb und raumseitig der Latentwärmespeicherkörper eingeblasen wird, genutzt werden.

Bei der Ausführungsform der Fig. 15 ist im Weiteren noch von Bedeutung, dass zugleich in der Zuluftleitung oberhalb der abgehängten Decke bzw. der Latentwärmespeicherkörper ein Induktionseffekt genutzt wird, wie er grundsätzlich schon in der Ausführungsform der Fig. 5 beschrieben worden ist.

Das heißt es wird flächenparallel zu der Oberfläche der Latentwärmespeicherkörper Luft angesaugt und damit bezüglich Raum-Umluft eine Zwangsströmung - oberhalb - entlang den Latentwärmespeicherkörpern ausgelöst, während zugleich unterseitig, unter Ausnutzung des genannten Koanda Effektes die Zuluft bevor sie in den Raum weiterströmt, stärker als durch natürliche Umluft gegeben, entlang strömt.

Bei der Ausführungsform der Fig. 15 wird im Übrigen die Abluft etwa entsprechend der Anordnung in Fig. 12 oder Fig. 13 oberhalb der Lätentwärmespeicherkörper abgesaugt.

Die Lüftungsaggregate, die in der Zu- und Abluftleitung angeordnet sind, sind mit entsprechenden Bezugszeichen der zuvor beschriebenen Ausführungsform gemäß Fig. 12 bis 14 versehen.

Die Kombination der Induktionslüftung oberhalb der Latentwärmespeicherkörper und die Ausnutzung des Koanda-Effektes unterhalb der Latentwärmespeicherkörper, beides durch die Zuluft hat einen sehr wesentlichen Einfluss auf die Heiz-/Kühlleistung einer solchen Anordnung bezüglich eines Gebäuderaumes.

## Patentansprüche

1. Verfahren zur wärme- und/oder kältemäßigen und gegebenenfalls feuchtigkeitsmäßigen Konditionierung von Raumluft eines Gebäuderaumes, wobei Zuluft in den Gebäuderaum strömt und Abluft aus dem Gebäuderaum herausgeführt wird, wobei weiter die Raumluft durch Anordnung von Latentwärmespeicherkörpern in ihrem Wärmegehalt verändert wird, mittels in dem Gebäuderaum angeordneter Latentwärmespeicherköper, **dadurch gekennzeichnet, dass** eine gesonderte, eine Zuluftströmung ausbildende Zuluft-Führung vorgesehen ist und dass die Zuluft unterhalb der Latentwärmespeicherkörper unter Nützung des Koanda-Effektes entlang den Latentwärmespeicherkörpern ausgeblasen wird, während flächenparallel zu der Oberfläche der Latentwärmespeicherkörper Luft angesaugt wird und bezüglich Raum-Umluft eine Zwangsströmung -oberhalb - entlang der Latentwärmespeicherkörper durch Induktionslüftung bewirkt wird.

2. Verfahren nach Anspruch 1, **dadurch gekennzeichnet, dass** die Latentwärmespeicherkörper oberhalb einer luftdurchlässigen Sichtdecke angeordnet sind.

3. Verfahren nach einem der vorhergehenden Ansprüche, **dadurch gekennzeichnet, dass** die Be- bzw. Entladung der Latentwärmespeicherkörper durch eine unterschiedliche Konditionierung der Raumluft vorgenommen wird.

4. Verfahren nach Anspruch 3, **dadurch gekennzeichnet**, das die Be- bzw. Entladung der Latentwärmespeicherkörper durch unterschiedliche Tag-/Nacht-Konditionierung der Raumluft vorgenommen wird.

5. Verfahren nach einem der Ansprüche 1 bis 3, **dadurch gekennzeichnet, dass** eine Be- bzw. Entladung der Latentwärmespeicherkörper durch die Zu- bzw. Abluft unter Ausnutzung entgegengesetzter Belastungsfälle vorgenommen wird.

6. Verfahren nach einem der vorhergehenden Ansprüche, **dadurch gekennzeichnet, dass** das Latentwärmespeichermaterial in einer Schaumstoffmatrix eines offensporigen Schaumstoffes angeordnet ist.

7. Verfahren nach einem der vorhergehenden Ansprüche, **dadurch gekennzeichnet, dass** das Latentwärmespeichermaterial von einer dampfdiffusionsdichten Abdeckung, etwa einer Aluminiumfolie, überdeckt ist.

8. Verfahren zur Wärme- und / oder Kälteversorgung nach einem der vorhergehenden Ansprüche, **dadurch gekennzeichnet, dass** die Zuluft oberhalb einer Zwischendecke eingegeben wird und dass die Abluft oberhalb der Zwischendecke abgesaugt wird.

9. Verfahren zur Wärme- und / oder Kälteversorgung nach einem der vorhergehenden Ansprüche, **dadurch gekennzeichnet, dass** die Abluft oberhalb der Decken-Latentwärmespeicherkörper abgesaugt wird, die Zuluft aber unterhalb der Decken-Latentwärmespeicherkörper eingedüst wird.

10. Verfahren zur Wärme- und / oder Kälteversorgung nach einem der vorhergehenden Ansprüche, **dadurch gekennzeichnet, dass** in der Heizperiode außerhalb einer Bürozeit ein Umluftbetrieb gefahren wird zur Aufheizung der Latentwärmespeicherkörper mittels maschinengebundener Wärmequellen in dem Gebäuderaum.

11. Gebäude mit einer Mehrzahl von Räumen, wobei ein Gebäuderaum über eine Zu- und Abluftleitung verfügt, welche, bevorzugt außerhalb des Gebäuderaumes, über einen wärmtetaucher zu Durchführung eines sensiblen oder rekuperativen Wärmtetausches verbunden sind, wobei weiter innerhalb des Gebäuderaumes zugängig einer freien Raumströmung und zugeordnet einer Raumdecke, Latentwärmespeicherkörper angeordnet sind und dass die Zu- und/ oder Abluft mittels der Latentwärmespeicherkörper in ihrem wärmegehalt verändert ist, **gekennzeichnet durch** als Flachkörper ausgebildeten Latentwärmespeicherkörper und Induktionslüftung, wobei
eine Zuluftströmung ausgildende Zuluft-Führung vorgesehen ist und dass die Zuluft unterhalb der Latentwärmespeicherkörper unter Nützung des Koanda-Effektes entlang den Latentwärmespeicherkörpern ausgeblasen wird, wahrend flachen-parallel zu der Oberflache der Latentwärmespeicherkörper Luft angesaugt wird und bezüglich Raum-Umluft eine Zwangsströmung - oberhalb- entlang Latentwärmespeicherkörper **durch** Induktionslüftung bewirkt wird.

## Claims

1. Method for conditioning ambient air in a room of a building in terms of heat and/or cold and optionally humidity, wherein incoming air flows into the room of the building and outgoing air is conducted out of the room of the building, wherein, furthermore, the ambient air in the room is modified in its thermal content by arrangement of latent heat accumulator bodies, by means of latent heat accumulator bodies arranged in the room of the building, **characterized in that** a separate incoming-air conduction feature, which forms an incoming-air flow, is provided and **in that** the incoming air is blown out underneath the latent heat accumulator bodies, by utilizing the Koanda effect, along the latent heat accumulator bodies, while air is sucked in parallel to the surface of the latent heat accumulator bodies and, with respect to circulating air in the room, a positive flow is effected above/along the latent heat accumulator bodies by induction ventilation.

2. Method according to Claim 1, **characterized in that** the latent heat accumulator bodies are arranged above an air-permeable visible ceiling.

3. Method according to one of the preceding claims, **characterized in that** the charging and discharging of the latent heat accumulator bodies is performed by different conditioning of the ambient air in the room.

4. Method according to Claim 3, **characterized in that** the charging and discharging of the latent heat accumulator bodies is performed by different daytime/nighttime conditioning of the ambient air in the room.

5. Method according to one of Claims 1 to 3, **characterized in that** charging and discharging of the latent heat accumulator bodies by the incoming air or outgoing air is performed by using opposed loading cases.

6. Method according to one of the preceding claims, **characterized in that** the latent heat accumulator material is arranged in a foam matrix of an open-pore foam.

7. Method according to one of the preceding claims, **characterized in that** the latent heat accumulator material is covered over by a vapour-diffusion-impermeable covering, for instance an aluminium foil.

8. Method for heating and/or cooling according to one of the preceding claims, **characterized in that** the incoming air is introduced above a false ceiling and **in that** the outgoing air is removed by suction above the false ceiling.

9. Method for heating and/or cooling according to one of the preceding claims, **characterized in that** the outgoing air is removed by suction above the ceiling latent heat accumulator bodies, but the incoming air is blown in underneath the ceiling latent heat accumulator bodies.

10. Method for heating and/or cooling according to one of the preceding claims, **characterized in that** a circulating air mode is operated in the heating period outside office hours, for heating up the latent heat accumulator bodies by means of machine-associated heat sources in the room of the building.

11. A building with a plurality of rooms, wherein a room of the building has an incoming-air line and outgoing-air line which are connected, preferably outside the room of the building, via a heat exchanger for carrying out a sensible or recuperative heat exchange, wherein, furthermore, latent heat accumulator bodies are arranged inside the room of the building and are amenable to a free room flow and assigned to a room ceiling, and in that the incoming air and/or outgoing air is modified in its heat content by means of the latent heat accumulator bodies, **characterized by** latent heat accumulator bodies designed as flat bodies and induction ventilation, wherein an incoming-air conduction feature, which forms an incoming-air flow, is provided and in that the incoming air is blown out underneath the latent heat accumulator bodies, by utilizing the Koanda effect, along the latent heat accumulator bodies, while air is sucked in parallel to the surface of the latent heat accumulator bodies and, with respect to circulating air in the room, a positive flow is effected above/along latent heat accumulator bodies by induction ventilation.

## Revendications

1. Procédé de conditionnement par chauffage et/ou refroidissement et éventuellement humidification de l'air dans une pièce du bâtiment, de l'air d'apport affluant dans la pièce du bâtiment et de l'air d'évacuation étant évacué de la pièce du bâtiment, la chaleur dans l'air étant modifiée par une disposition de corps accumulateurs de chaleur latente, au moyen de corps accumulateurs de chaleur latente disposés dans la pièce du bâtiment, **caractérisé en ce qu'**il est prévu un guidage d'air d'apport séparé, constituant un écoulement d'air d'apport et **en ce que** l'air d'apport est soufflé en dessous des corps accumulateurs de chaleur latente en utilisant l'effet Coanda le long des corps accumulateurs de chaleur latente, tandis que l'air est aspiré parallèlement à la surface des corps accumulateurs de chaleur latente et un écoulement forcé est provoqué au-dessus, par rapport à l'air de recirculation dans la pièce, par ventilation par induction le long des corps accumulateurs de chaleur latente.

2. Procédé selon la revendication 1, **caractérisé en ce que** les corps accumulateurs de chaleur latente sont disposés au-dessus d'un faux-plafond perméable à l'air.

3. Procédé selon l'une quelconque des revendications précédentes, **caractérisé en ce que** la charge et la décharge des corps accumulateurs de chaleur latente sont effectuées par un conditionnement différent de l'air dans la pièce.

4. Procédé selon la revendication 3, **caractérisé en ce que** la charge et la décharge des corps accumulateurs de chaleur latente sont effectuées par un conditionnement jour/nuit de l'air dans la pièce.

5. Procédé selon l'une quelconque des revendications 1 à 3, **caractérisé en ce qu'**une charge et une décharge des corps accumulateurs de chaleur latente sont effectuées par l'air d'apport et l'air d'évacuation, respectivement, en utilisant des conditions de charge opposées.

6. Procédé selon l'une quelconque des revendications précédentes, **caractérisé en ce que** le matériau accumulateur de chaleur latente est disposé dans une matrice en mousse d'une mousse à pores ouverts.

7. Procédé selon l'une quelconque des revendications précédentes, **caractérisé en ce que** le matériau accumulateur de chaleur latente est recouvert par un recouvrement imperméable à la diffusion de vapeur, par exemple un film d'aluminium.

8. Procédé de chauffage et/ou de refroidissement selon l'une quelconque des revendications précédentes, **caractérisé en ce que** l'air d'apport est introduit au-dessus d'un plafond intermédiaire et **en ce que** l'air d'évacuation est aspiré au-dessus du plafond intermédiaire.

9. Procédé de chauffage et/ou de refroidissement selon l'une quelconque des revendications précédentes, **caractérisé en ce que** l'air d'évacuation est aspiré au-dessus des corps accumulateurs de chaleur latente du plafond, tandis que l'air d'apport est injecté en dessous des corps accumulateurs de chaleur latente du plafond.

10. Procédé de chauffage et/ou de refroidissement selon l'une quelconque des revendications précédentes, **caractérisé en ce que** pendant la période de chauffage en dehors des heures de bureau, un fonctionnement d'air de recirculation est mis en oeuvre pour chauffer les corps accumulateurs de chaleur latente au moyen de sources de chaleur reliées à des machines dans la pièce du bâtiment.

11. Bâtiment comprenant une pluralité de pièces, une pièce du bâtiment disposant d'une conduite d'apport d'air et d'évacuation d'air, qui sont connectées, de préférence à l'extérieur de la pièce du bâtiment, par le biais d'un échangeur de chaleur pour effectuer un échange thermique sensible ou par récupération, des corps accumulateurs de chaleur latente étant disposés en outre à l'intérieur de la pièce du bâtiment de manière accessible à un écoulement libre dans la pièce et de manière associée à un plafond de la pièce, et en ce que la chaleur dans l'air d'apport et/ou d'évacuation est modifiée au moyen des corps accumulateurs de chaleur latente, **caractérisé par** des corps accumulateurs de chaleur latente réalisés sous forme de corps plats et par une ventilation par induction,
un guidage d'air d'apport constituant un écoulement d'air d'apport étant prévu et en ce que l'air d'apport est soufflé en dessous des corps accumulateurs de chaleur latente en utilisant l'effet Coanda le long des corps accumulateurs de chaleur latente, tandis que de l'air est aspiré de manière plane parallèlement à la surface des corps accumulateurs de chaleur latente et qu'un écoulement forcé est provoqué au-dessus, par rapport à l'air de recirculation dans la pièce, par ventilation par induction le long des corps accumulateurs de chaleur latente.
